# EUROPÄISCHE PATENTANMELDUNG

(11) **EP 3 923 444 A1**
(43) Veröffentlichungstag der Anmeldung: **15.12.2021**
(21) Anmeldenummer: 20178835.3
(22) Anmeldetag: 08.06.2020
(51) Int. Cl.: H02J 50/10, B60L 13/03, B60L 15/00

(54) **LINEARANTRIEB UND VERFAHREN ZUM BETRIEB DIESES LINEARANTRIEBS**

(71) Anmelder: InDriveTec AG, 8050 Zürich (CH)
(72) Erfinder: JULEN, Eric, 8052 Zürich (CH); VINZENS, Martin, 8047 Zürich (CH)
(74) Vertreter: Schirbach, Marcel

(57) **Zusammenfassung**

Bei einem erfindungsgemässen Linearantrieb für den Betrieb eines Fahrzeugs (F) entlang eines ersten Streckenabschnitts (a1) einer Fahrstrecke (f) ist vorgesehen, dass dieser Linearantrieb eine erste Anzahl s von Statoren (S01,..., S06) des ersten Streckenabschnitts (a1) umfasst, die hintereinander entlang des ersten Streckenabschnitts (a1) angeordnet sind, wobei diese erste Anzahl s grösser oder gleich 2 ist [s ≥ 2], ferner, dass eine zweite Anzahl e von Energieversorgungseinheiten (U1, U2, U3) umfasst ist, wobei jede der e Energieversorgungseinheiten (U1, U2, U3) zumindest temporär mittels einer dritten Anzahl t von elektronischen Schaltern (T01,..., T06) mit jeweiligen Statoren (S01,..., S06) des ersten Streckenabschnitts (a1) -zwecks Versorgung derselben mit elektrischer Energie- verbindbar ist, wobei jeder einzelne elektronische Schalter (T01,...,T06) unmittelbar einem jeweiligen Stator (S01,..., S06) des ersten Streckenabschnitts (a1) zugeordnet ist, so dass die erste Anzahl s von Statoren (S01,..., S06) des ersten Streckenabschnitts (a1) und die dritte Anzahl t von elektronischen Schaltern (T01,..., T06) identisch ist [s = t],
- ferner umfassend wenigstens einen entlang des ersten Streckenabschnitts (a1) bewegbaren Magnetläufer (M), wobei der Magnetläufer (M) im Fahrbetrieb temporär zu einem Zeitpunkt (t1,..., t6) mit einer minimalen vierten Anzahl y von Statoren (S01,..., S06) des ersten Streckenabschnitts (a1) bzw. zu einem weiteren Zeitpunkt (t1,..., t6) mit einer maximalen fünften Anzahl x von Statoren (S01,..., S06) des ersten Streckenabschnitts (a1) in Wirkverbindung steht, welche fünfte Anzahl x um 1 grösser ist als die vierte Anzahl y [x = y + 1], dadurch gekennzeichnet, dass die zweite Anzahl e von Energieversorgungseinheiten (U1, U2, U3) mit der fünften Anzahl x von maximal mit dem Magnetläufer (M) wirkverbundener Statoren (S01,..., S06) des ersten Streckenabschnitts (a1) identisch ist [e = x], und wobei jeder elektronische Schalter (T01,...,T06) neben der unmittelbaren Zuordnung bzw. schaltbaren Verbindung zu dem jeweiligen Stator (S01,..., S06) des ersten Streckenabschnitts (a1) ferner über benachbarte elektronische Schalter (T01,...,T06) eine mittelbare Zuordnung bzw. geschaltete Verbindung zu weiteren, benachbarten Statoren (S01,..., S06) weiterer Streckenabschnitte (a2, a3) aufweist.

## Beschreibung

### Technisches Gebiet

Die vorliegende Erfindung fällt in den technischen Bereich von elektrischen An trieben für Schienenfahrzeuge; sie betrifft vorliegend einen Linearantrieb für den Betrieb eines Fahrzeugs entlang eines Streckenabschnitts einer Fahrstrecke gemäss dem Oberbegriff des Anspruchs 1.

### Stand der Technik, technologischer Hintergrund der Erfindung

Einen bekannten Linearantrieb offenbart die Druckschrift WO 1999/24284, welcher Linearantrieb eine Statoranordnung mit einer Mehrzahl von in einer Anordnungsrichtung aufeinanderfolgenden Statorabschnitten umfasst, wobei eine Energiequelle und eine Schalteranordnung mit jeweils einer Schaltervorrichtung für jeden Statorabschnitt vorgesehen ist. Ferner tritt eine bezüglich der Statoranordnung in der Anordnungslängsrichtung bewegbare Läuferbaugruppe mit einer Anzahl Statorabschnitten in einem Bereich in eine Wirkverbindung, wobei nur diejenigen Statorabschnitte ausschliesslich über jeweils zugehörige Schaltvorrichtungen mit Energie versorgt werden, welche Statorabschnitte über deren Länge hinweg vollständig mit der Läuferbaugruppe in dieser Wirkverbindung stehen und diejenigen Statorabschnitte, die nicht oder nur teilweise über deren Länge der Läufergruppe gegenüberstehen, frei sind von Energie, so dass auch die zugehörigen Schaltvorrichtungen lastfrei offen stehen. Bei diesem vorliegenden Linearantrieb ist die Länge der Läuferbaugruppe grösser als die Gesamtlänge der maximal mit dieser Läuferbaugruppe in Wirkverbindung stehenden Statorabschnitte, das heisst, die Läuferbaugruppe steht nur periodisch mit dessen Gesamtlänge in Wirkverbindung mit Statorabschnitten.

Die Druckschrift EP 2 156 979 B1 zeigt einen Linearantrieb, bei welchem sich eine Wechselwirkung zwischen den vollständig und teilweise durch die Läufergruppe abgedeckten Statorabschnitten ausbildet, wobei diese vollständig und teilweise abgedeckten Statorabschnitte über ihre ausschliesslich jeweils zugehörigen Schaltvorrichtungen und Energiequellen mit Energie versorgt sind und wobei in Laufrichtung unmittelbar vorgelagerte und unmittelbar nachgelagerte Statorabschnitte mit deren jeweiligen Schaltvorrichtungen und Energiequellen vollkommen lastfrei sind und als solches vorgängig abgeschaltet wurden bzw. später zugeschalten werden. Bei dieser Anordnung sind Statorabschnitte und vor allem deren jeweils zugehörigen Energiequellen periodisch lastfrei bzw. ungenutzt.

### Darstellung der Erfindung

Es ist deshalb Aufgabe der vorliegenden Erfindung, einen Linearantrieb dahingehend weiterzuentwickeln, dass ein effizienterer Betrieb zwischen einem Magnetläufer und einer Anzahl hintereinander entlang eines Streckenabschnitts angeordneter Statoren und deren zugehörigen Energieversorgungseinheiten ermöglicht wird.

Die der Erfindung für den Linearantrieb zugrundeliegende Aufgabe wird gelöst durch die Merkmale des Anspruchs 1; die der Erfindung für das Verfahren zum Betrieb des Linearantriebs zugrundeliegende Aufgabe wird gelöst durch die Merkmale des Anspruchs 2; die diesen Erfindungsgedanken weiterbildenden Merkmale sind jeweils Gegenstand der Unteransprüche 3 und 4.

Der Kern der vorliegenden Erfindung ist darin zu sehen, dass die Anzahl von Energieversorgungseinheiten mit der Anzahl von maximal mit dem Magnetläufer wirkverbundener Statoren identisch ist, das bedeutet, dass alle Energieversorgungseinheiten quasi permanent unter Last stehen und in zeitlicher Abfolge diejenigen Statoren mit Energie versorgen, die mit dem Magnetläufer nacheinander soeben noch in Wirkverbindung stehen oder augenblicklich über deren Gesamtlänge wirkverbunden sind oder unmittelbar vor dem Eintritt in die Wirkverbindung mit einem nachfolgenden Magnetläufer stehen. Für diese Art der Energieversorgung gelangen elektronische Schalter zum Einsatz, die die Energieversorgungseinheiten quasi von einem ersten Stator auf einen nachfolgend mit dem Magnetläufer in Wirkverbindung tretenden Stator durchschalten, so dass die verwendeten Energieversorgungseinheiten permanent belastet sind und somit hocheffizient genutzt werden. Die zugehörigen elektronischen Schalter schalten dabei grundsätzlich zwischen zwei Schaltzuständen nacheinander hin und her: (a.) ein erster elektronischer Schalter schaltet die direkte Verbindung zwischen einer ersten Energieversorgungseinheit und einem ersten Stator durch, und (b.), dieser erste elektronische Schalter trennt diese erste Energieversorgungseinheit wieder von diesem ersten Stator, wobei diese erste Energieversorgungseinheit mittelbar auf einen räumlich und zeitlich benachbarten Stator aufgeschaltet wird. Auf diese Art sind die Energieversorgungseinheiten im Dauerbetrieb und gegenüber konventionellen Linearantrieben lässt sich die Anzahl notwendiger Energieversorgungseinheiten reduzieren, inklusive zugehöriger Verkabelung. Dieser Vorteil einer reduzierten Installation in einem kleineren Installationsraum wird zudem dadurch unterstrichen, dass der Magnetläufer im Fahrbetrieb permanent und über seine gesamte Länge in einer magnetischen Wirkverbindung mit der ortsgebundenen Installation von Statoren steht, das heisst, der Magnetläufer ist über dessen Gesamtlänge permanent nutzbar für ein Antriebsmoment bzw. Bremsmoment, womit auf einer kürzeren Gesamtinstallationslänge gegenüber dem Stand der Technik eine höhere Leistungsdichte erzielbar ist mit einer grösseren positiven Beschleunigung auf höhere Geschwindigkeiten bzw. einer grösseren negativen Beschleunigung beim Bremsen.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen versehen. An dieser Stelle wird darauf hingewiesen, dass die Figuren keinerlei einschränkende Wirkung auf den vorliegenden Erfindungsgegenstand als solches haben, sondern lediglich exemplarische Ausführungsformen des Erfindungsgedankens darstellen, der selbstverständlich ohne jeden weiteren schöpferischen Beitrag, auch auf andere Linearantriebe anwendbar ist, deren Magnetläufer eine Wirkverbindung mit mehr als drei Statoren eingehen kann.

Es zeigen rein schematisch die
- Fig. 1a - 1f: einen erfindungsgemässen Linearantrieb mit einem Magnetläufer, der im Fahrbetrieb zeitlicher Aufnahmemomente t1 bis t6 maximal mit zwei Statoren eine Wirkverbindung eingeht, und
- Fig. 2a - 2f: eine Ausführungsform des erfindungsgemässen Linearantriebs gemäss Fig. 1a - Fig. 1f, bei welchem der Magnetläufer im Fahrbetrieb zeitlicher Aufnahmemomente t1 bis t6 maximal mit drei Statoren eine Wirkverbindung eingeht.

### Wege zur Ausführung der Erfindung

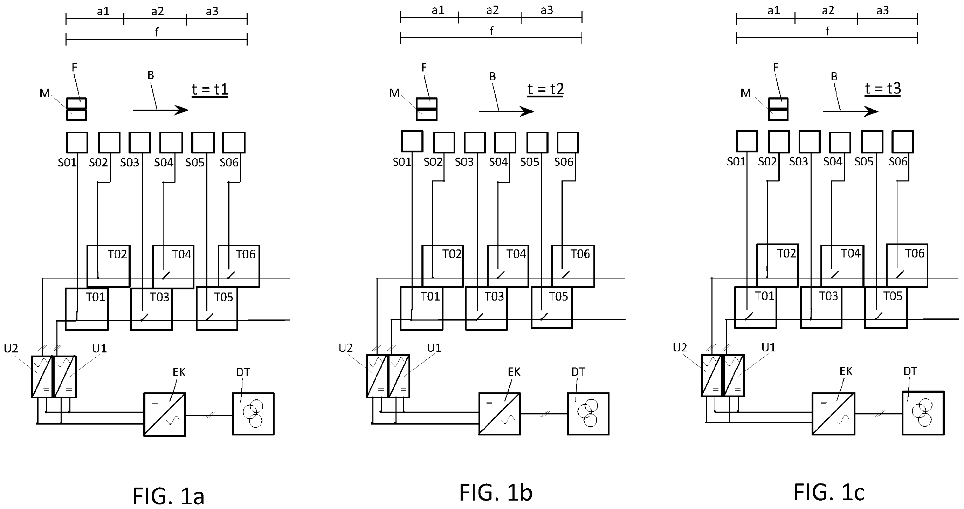

In den Fig. 1a - 1f ist in einer zeitlichen Abfolge von Aufnahmemomenten t1 bis t6 ein erfindungsgemässer Linearantrieb für den Betrieb eines Fahrzeugs F entlang eines ersten Streckenabschnitts a1 einer Fahrstrecke f gezeigt. Dieser Linearantrieb umfasst im ersten Streckenabschnitt a1 zwei Statoren, namentlich den Stator S01 und den Stator S02, die hintereinander entlang des ersten Streckenabschnitts a1 angeordnet sind, womit die erste Anzahl s von Statoren S01, S02 im ersten Streckenabschnitt 2 ist, was im Übrigen die Minimalanzahl von Statoren des vorliegenden Linearantriebs darstellt.

Ferner umfasst dieser Linearantrieb eine zweite Anzahl e von Energieversorgungseinheiten U1, U2, wobei jede der e Energieversorgungseinheiten U1, U2 zumindest temporär mittels einer dritten Anzahl t von elektronischen Schaltern T01, T02 mit jeweiligen Statoren S01, S02 des ersten Streckenabschnitts a1 -zwecks Versorgung derselben mit elektrischer Energie- verbindbar ist, wobei jeder einzelne elektronische Schalter T01, T02 unmittelbar dem jeweiligen Stator S01, S02 des ersten Streckenabschnitts a1 zugeordnet ist, so dass die erste Anzahl s von Statoren S01, S02 und die dritte Anzahl t von elektronischen Schaltern T01, T02 identisch ist und somit vorliegend s = t = 2 ist. Bei dem vorliegenden Linearantrieb ist ein Magnetläufer M vorgesehen, der im Fahrbetrieb temporär zu einem ersten Zeitpunkt t1 mit einer minimalen vierten Anzahl y von Statoren des ersten Streckenabschnitts a1, namentlich dem Stator S01, in Wirkverbindung steht, bzw. zu einem weiteren Zeitpunkt t2 mit einer maximalen fünften Anzahl x von Statoren des ersten Streckenabschnitts a1, namentlich den Statoren S01 und S02, in Wirkverbindung steht, wobei diese fünfte Anzahl x um 1 grösser ist als die vierte Anzahl y, nämlich x = y + 1. Erfindungswesentlich ist dabei, dass die zweite Anzahl e = 2 von Energieversorgungseinheiten U1, U2 mit der fünften Anzahl x = 2 von maximal mit dem Magnetläufer M wirkverbundener Statoren des ersten Streckenabschnitts a1, namentlich die Statoren S01 und S02, identisch ist, nämlich e = x = 2, und wobei die beiden elektronischen Schalter T01, T02 neben der unmittelbaren Zuordnung bzw. schaltbaren Verbindung zu dem jeweiligen Stator S01, S02 des ersten Streckenabschnitts a1 ferner über benachbarte elektronische Schalter T03 - T06 eine mittelbare Zuordnung bzw. geschaltete Verbindung zu weiteren, benachbarten Statoren S03 - S06 eines zweiten bzw. dritten Streckenabschnitts a2 bzw. a3 aufweist.

Die Fig. 1a zeigt den Linearantrieb in einem Aufnahmemoment zu einem Zeitpunkt t1. Hier ist erkennbar, dass der Magnetläufer M derart ausgebildet ist, dass er ausschliesslich mit den Stator S01 eine Wirkverbindung eingeht, das heisst, der Magnetläufer M ist so lang wie der Stator S01 in Bewegungsrichtung B. Der dem Stator S01 zugehörige elektronische Schalter T01 ist derart geschaltet, dass der Stator S01 von der Energieversorgungseinheit U1 mit Energie versorgt wird und ein dieser Energieversorgungseinheit U1 vorgelagerter Einspeisekonverter EK aus einen Drehstromnetztransformator DT gespeist wird. Typischerweise ist die Energieversorgungseinheit U1 als ein Umrichter U1 ausgebildet bzw. als ein Dreiphasen-Umrichter U1, wie im Übrigen die weitere Energieversorgungseinheit U2 ebenfalls. Zum Zeitpunkt t1 ist der zweite Stator S02 über den elektronischen Schalter T02 mit dem zweiten Umrichter U2 verbunden, mit dem der Magnetläufer M nachfolgend in Bewegungsrichtung B im Fahrbetrieb ebenfalls in Wirkverbindung treten werden wird.

Im Aufnahmemoment des Zeitpunkts t2 zeigt die Fig. 1b, dass sich der Magnetläufer M in Bewegungsrichtung B des Fahrbetriebs fortbewegt hat und gerade noch teilweise mit dem ersten Stator S01 in Wirkverbindung steht und bereits teilweise mit dem zweiten Stator S02 wirkverbunden ist. Beide Statoren S01 und S02 des ersten Streckenabschnitts a1 werden gleichzeitig über ihre zugeordneten elektronischen Schalter T01 und T02 und vorgeschalteten Energieversorgungeinheiten bzw. Umrichter U1 und U2 mit Energie versorgt.

In der Fig. 1c ist der Aufnahmemoment im Zeitpunkt t3 gezeigt, im welchem der Magnetläufer M nun ausschliesslich mit dem zweiten Stator S02 in Wirkverbindung steht, welcher Stator S02 über dessen elektronischen Schalter T02 aus dem Umrichter U2 versorgt wird. Zu diesem Zeitpunkt t3 hat der erste elektronische Schalter T01 die erste Energieversorgungseinheit vom Stator S01 getrennt und die erste Energieversorgungseinheit U1 ist über den dritten elektronischen Schalter T03 auf den zugehörigen dritten Stator S03 im zweiten Streckenabschnitt a2 verbunden und wird mit Energie versorgt wird. Die Abschaltung des ersten Stators S01 vom ersten Umrichter U1 und die Zuschaltung des dritten Stators S03 zu dieser ersten Energieversorgungseinheit U1 bzw. diesem ersten Umrichter U1 erfolgt zeitgleich, so dass dieser Umrichter U1 permanent -also unterbrechungsfrei- Energie zum Linearantrieb liefert.

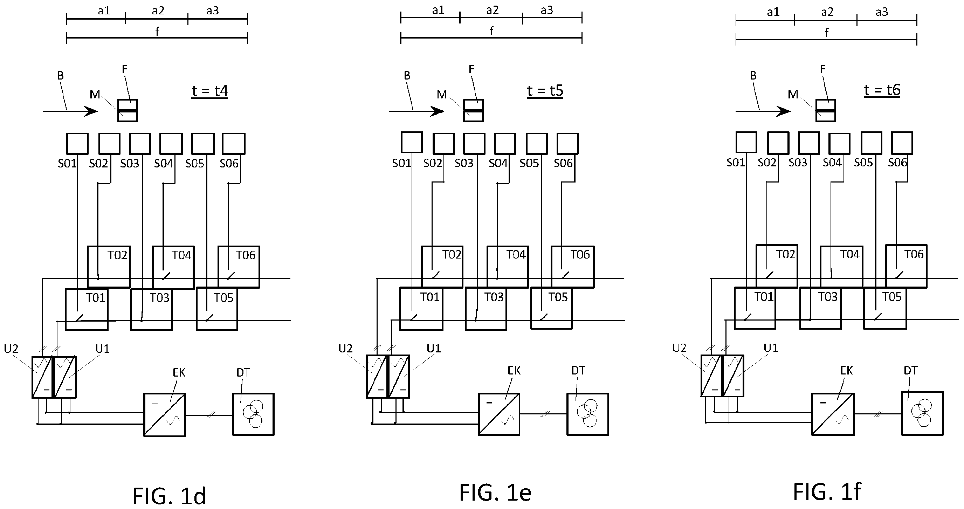

In der Fig. 1d ist der Aufnahmemoment im Zeitpunkt t4 gezeigt, im welchem der Magnetläufer M gerade den Streckenabschnitt a1 verlässt und in den Streckenabschnitt a2 eintritt, das heisst, der Magnetläufer M steht hier mit dem zweiten Stator S02 gerade noch teilweise und dem dritten Stator S03 soeben teilweise in Wirkverbindung, wobei der Stator S02 über den unmittelbar zugeordneten elektronischen Schalter T02 vom zweiten Umrichter U2 gespeist wird und der dritte Stator S03 über den unmittelbar zugeordneten elektronischen Schalter T03 und den mittelbar zugeordneten elektronischen Schalter T01 vom ersten Umrichter U1 gespeist wird.

Der Aufnahmemoment zum Zeitpunkt t5 ist in Fig. 1e dargestellt, in welchem der Magnetläufer M temporär ausschliesslich mit dem dritten Stator S03 in Wirkverbindung steht, wobei dieser dritte Stator S03 über den unmittelbar zugeordneten elektronischen Schalter T03 und den mittelbar zugeordneten elektronischen Schalter T01 aus dem ersten Umrichter U1 versorgt wird; gleichzeitig schaltet der vierte elektronischen Schalter T04 den zweiten Umrichter U2 auf den vierten Stator S04 durch, wobei gleichzeitig der zweite Stator S02 von diesem zweiten Umrichter U2 getrennt wird.

Der Aufnahmemoment zum Zeitpunkt t6 in Fig. 1f zeigt wiederum eine ähnliche Schaltsituation bzw. Speisesituation wie in Fig. 1d oder Fig. 1b, nämlich, dass der Magnetläufer M eine zwei Statoren brückende Wirkverbindung eingeht; vorliegend mit dem dritten Stator S03 und dem vierten Stator S04, wobei sich der Schaltzustand der elektronischen Schalter gegenüber dem Schaltzustand in Fig. 1e nicht geändert hat; somit wird der dritte Stator S03 über den unmittelbar zugeordneten elektronischen Schalter T03 und den mittelbar zugeordneten elektronischen Schalter T01 aus dem ersten Umrichter U1 gespeist und der vierte Stator S04 über den unmittelbar zugeordneten elektronischen Schalter T04 und den mittelbar zugeordneten elektronischen Schalter T02 aus dem zweiten Umrichter U2.

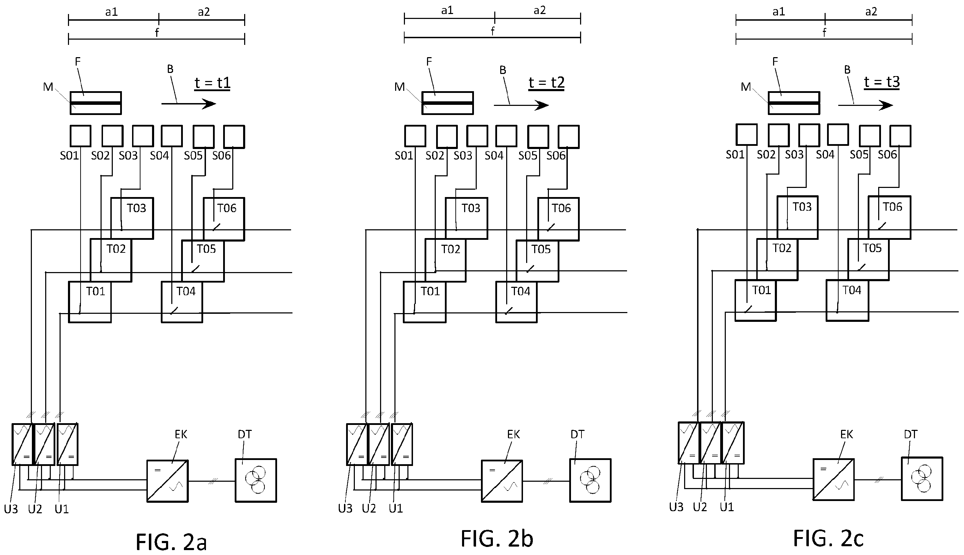

In den Fig. 2a bis Fig. 2f ist eine Ausführungsform des erfinderischen Linearantriebs gezeigt, mit zu den Darstellungen in den Fig. 1a bis Fig. 1f analogen Aufnahmemomente zu den Zeitpunkten t1 bis t6, wobei der hier zur Anwendung gelangende Magnetläufer M derart ausgebildet ist, dass dieser minimal mit zwei benachbarten Statoren S01 und S02 eines ersten Streckenabschnitts a1 in Wirkverbindung steht, siehe Fig. 2a, und maximal mit drei benachbarten Statoren des ersten Streckenabschnitts a1, namentlich mit den Statoren S01, S02 und S03, wirkverbunden ist, siehe Fig. 2b. Hieraus ergibt sich erfindungsgemäss für y = 2 als minimale Anzahl wirkverbundener Statoren für x, x = y + 1 = 3, womit auch die Anzahl e von Energieversorgungseinheiten U1, U2, U3 mit x = e = 3 gegeben ist.

Der Aufnahmemoment zum Zeitpunkt t1 in Fig. 2a zeigt, dass im ersten Streckenabschnitt a1 die drei Statoren S01, S02 und S03 über deren unmittelbar zugeordnete elektronische Schalter T01, T02 und T03 aus den vorgeschalteten Umrichtern U1, U2 und U3 mit Energie versorgt werden, wobei sich der Magnetläufer M des Fahrzeugs F lediglich über den ersten Stator S01 und den zweiten Stator S02 erstreckt und der dritte Stator S03 bereits deshalb versorgt wird, da der Magnetläufer M sich im Fahrbetrieb in die Bewegungsrichtung B verfügt und somit nahtlos bzw. unterbrechungsfrei in die Wirkverbindung mit dem Stator S03 hineinfährt.

Die Fig. 2b zeigt im Aufnahmemoment zum Zeitpunkt t2, dass der Magnetläufer M nun tatsächlich mit drei Statoren, namentlich den Statoren S01, S02, S03, in Wirkverbindung steht, wobei der Magnetläufer gerade noch teilweise mit dem ersten Stator S01 wechselwirkt, mit dem zweiten Stator S02 vollständig und mit dem dritten Stator S03 gerade eben schon teilweise wobei alle Schaltverbindungen identisch zu denen in Fig. 2a sind.

Zum Zeitpunkt t3 des Aufnahmemoments in Fig. 2c steht der Magnetläufer M nur noch mit dem zweiten Stator S02 und dem dritten Stator S03 in Wirkverbindung, weshalb nun der erste elektronische Schalter T01 den ersten Umrichter U1 vom ersten Stator S01 getrennt hat und erste Umrichter U1 über den vierten elektronischen Schalter T04 auf den vierten Stator S04 aufgeschaltet ist. Auch hier erfolgt die Schalthandlung, nämlich die Abschaltung des ersten Stators S01 und die Zuschaltung des vierten Stators S04 gleichzeitig unterbruchsfrei, so dass der vorgängig noch den ersten Stator S01 speisende Umrichter U1 mit dieser Schalthandlung nachfolgend nahtlos den vierten Stator S04 versorgt; der Umrichter U1 arbeitet somit im unterbrechungsfreien Dauerbetrieb.

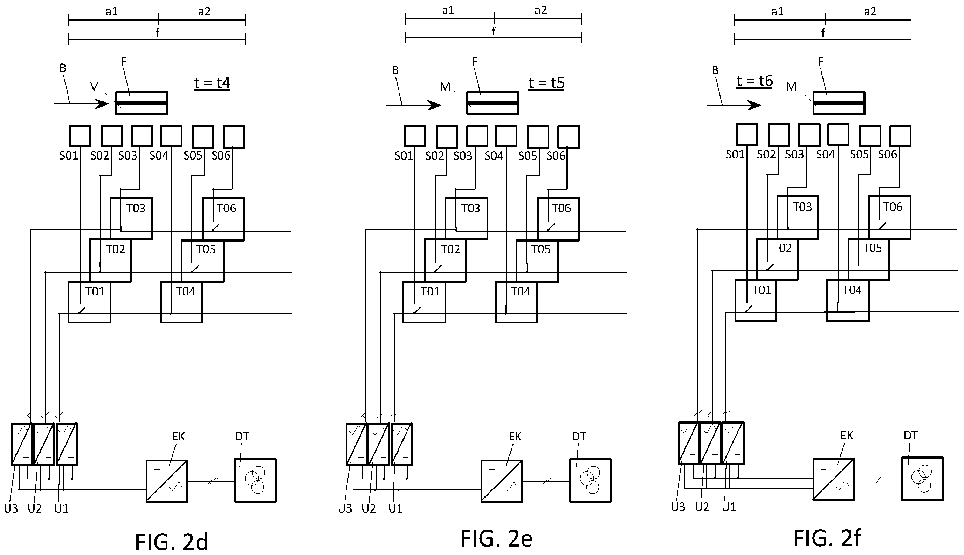

Fig. 2d zeigt nun in gegenüber der Darstellung in Fig. 2c unveränderter Schaltposition der elektronischen Schalter T01 bis T04 den Aufnahmemoment zum Zeitpunkt t4, wobei der Magnetläufer M mit dem zweiten, dem dritten und dem vierten Stator S02, S03, S04 wechselwirkt. Konsequenterweise ergeben sich die weiteren Schalthandlungen bzw. Schaltpositionen in den Fig. 2e bzw. 2f analog zu denjenigen in den Fig. 2c bzw. 2d. So zeigt Fig. 2e den Aufnahmemoment zum Zeitpunkt t5, in welchem der Magnetläufer M ausschliesslich den Statoren S03 und S04 wechselwirkend gegenübersteht, wobei nun der Umrichter U2 zum einen vom zweiten Stator S02 getrennt wird und gleichzeitig über die elektronischen Schalter T02 und T05 auf den fünften Stator S05 aufgeschaltet wird. Diese Schaltposition bleibt im Aufnahmemoment zum Zeitpunkt t6 in Fig. 2f aufrechterhalten, während der Magnetläufer M nun wieder mit drei Statoren, nämlich mit Stator S03, S04 und S05 in einer Wechselwirkung steht.

Ohne den hier ausführlich gezeigten Erfindungsgedanken zu verlassen, ist jede weitere Ausführungsform denkbar, bei der die maximale Anzahl von mit dem Magnetläufer M wirkverbundener Statoren denkbar und die Installation hinsichtlich des Umrichterbedarfs konsequent anpassbar. Ferner sei darauf hingewiesen, dass vorliegend durchgängig von elektronischen Schaltern die Rede ist, die Verbindungen zwischen Energieversorgungseinrichtungen und Statoren herstellen bzw. trennen; bei diesen elektronischen Schaltern kann es sich um Thyristoren handeln oder MOS-FETs, um IGBTs oder IGCTs, wobei diese Aufzählung mit Blick auf die Erfindung nicht einschränkend zu verstehen ist.

### Bezugszeichenliste

- F: Fahrzeug
- f: Fahrstrecke
- a1, a2, a3: Streckenabschnitt
- S01 - S06: Stator
- s: Anzahl von Statoren
- U1 - U3: Energieversorgungseinheit, Umrichter
- e: Anzahl von Energieversorgungseinheiten bzw. Umrichtern
- T01 - T06: elektronische Schalter
- t: Anzahl von elektronischen Schaltern
- M: Magnetläufer
- t1 - t6: Zeitpunkte verschiedener Aufnahmemomente
- B: Bewegungsrichtung im Fahrbetrieb
- EK: Einspeisekonverter
- DT: Drehstromnetztransformator

## Patentansprüche

1. Linearantrieb für den Betrieb eines Fahrzeugs (F) entlang eines ersten Streckenabschnitts (a1) einer Fahrstrecke (f),
- umfassend eine erste Anzahl s von Statoren (S01,..., S06), die hintereinander entlang des ersten Streckenabschnitts (a1) angeordnet sind, wobei diese erste Anzahl s grösser oder gleich 2 ist [s ≥ 2];
- umfassend eine zweite Anzahl e von Energieversorgungseinheiten (U1, U2, U3), wobei jede der e Energieversorgungseinheiten (U1, U2, U3) zumindest temporär mittels einer dritten Anzahl t von elektronischen Schaltern (T01,..., T06) mit jeweiligen Statoren (S01,..., S06) des ersten Streckenabschnitts (a1) -zwecks Versorgung derselben mit elektrischer Energie- verbindbar ist, wobei jeder einzelne elektronische Schalter (T01,...,T06) unmittelbar einem jeweiligen Stator (S01,..., S06) des ersten Streckenabschnitts (a1) zugeordnet ist, so dass die erste Anzahl s von Statoren (S01,..., S06) und die dritte Anzahl t von elektronischen Schaltern (T01,..., T06) identisch ist [s = t],
- ferner umfassend wenigstens einen entlang des ersten Streckenabschnitts (a1) bewegbaren Magnetläufer (M), wobei der Magnetläufer (M) im Fahrbetrieb temporär zu einem Zeitpunkt (t1,..., t6) mit einer minimalen vierten Anzahl y von Statoren (S01,..., S06) des ersten Streckenabschnitts (a1) bzw. zu einem weiteren Zeitpunkt (t1,..., t6) mit einer maximalen fünften Anzahl x von Statoren (S01,..., S06) des ersten Streckenabschnitts (a1) in Wirkverbindung steht, welche fünfte Anzahl x um 1 grösser ist als die vierte Anzahl y [x = y + 1], **dadurch gekennzeichnet, dass** die zweite Anzahl e von Energieversorgungseinheiten (U1, U2, U3) mit der fünften Anzahl x von maximal mit dem Magnetläufer (M) wirkverbundener Statoren (S01,..., S06) des ersten Streckenabschnitts (a1) identisch ist [e = x], wobei jeder elektronische Schalter (T01,...,T06) neben der unmittelbaren Zuordnung bzw. schaltbaren Verbindung zu dem jeweiligen Stator (S01,..., S06) des ersten Streckenabschnitts (a1) ferner über benachbarte elektronische Schalter (T01,...,T06) eine mittelbare Zuordnung bzw. geschaltete Verbindung zu weiteren, benachbarten Statoren (S01,..., S06) eines weiteren Streckenabschnitts (a2, a3) aufweist.

2. Verfahren zum Betrieb eines Linearantriebs für ein Fahrzeug (F) entlang eines ersten Streckenabschnitts (a1) einer Fahrstrecke (f), wobei der Linearantrieb wenigstens einen entlang des ersten Streckenabschnitts (a1) beweglichen Magnetläufer (M) umfasst, wobei der Linearantrieb des Weiteren eine erste Anzahl s von Statoren (S01,..., S06) des ersten Streckenabschnitts (a1) aufweist, die hintereinander entlang des ersten Streckenabschnitts (a1) angeordnet sind und diese erste Anzahl s grösser oder gleich 2 ist [s ≥ 2]; wobei der Linearantrieb eine zweite Anzahl e von Energieversorgungseinheiten (U1, U2, U3) umfasst, und jede der e Energieversorgungseinheiten (U1, U2, U3) zumindest temporär mittels einer dritten Anzahl t von elektronischen Schaltern (T01,..., T06) mit jeweiligen Statoren (S01,..., S06) des ersten Streckenabschnitts (a1) -zwecks Versorgung derselben mit elektrischer Energie- verbunden ist und jeder einzelne elektronische Schalter (T01,...,T06) direkt einem jeweiligen Stator (S01,..., S06) des ersten Streckenabschnitts (a1) zugeordnet ist, so dass die erste Anzahl s von Statoren (S01,..., S06) des ersten Streckenabschnitts (a1) und die dritte Anzahl t von elektronischen Schaltern (T01,..., T06) identisch ist [s = t], wobei der Magnetläufer (M) im Fahrbetrieb entlang des ersten Streckenabschnitts (a1) temporär zu einem Zeitpunkt (t1,..., t6) mit einer minimalen vierten Anzahl y von Statoren (S01,..., S06) des ersten Streckenabschnitts (a1) bzw. zu einem weiteren Zeitpunkt (t1,..., t6) mit einer maximalen fünften Anzahl x von Statoren (S01,..., S06) des ersten Streckenabschnitts (a1) in Wirkverbindung steht, welche fünfte Anzahl x um 1 grösser ist als die vierte Anzahl y [x = y + 1], **dadurch gekennzeichnet, dass** die zweite Anzahl e von Energieversorgungseinheiten (U1, U2, U3) mit der fünften Anzahl x von maximal mit dem Magnetläufer (M) wirkverbundenen Statoren (S01,..., S06) des ersten Streckenabschnitts (a1) identisch ist [e = x], und wobei jeder elektronische Schalter (T01,...,T06) neben der unmittelbaren Zuordnung bzw. schaltbaren Verbindung zu dem jeweiligen Stator (S01,..., S06) des ersten Streckenabschnitts (a1) ferner über benachbarte elektronische Schalter (T01,...,T06) eine mittelbare Zuordnung bzw. geschaltete Verbindung zu weiteren, benachbarten Statoren (S01,..., S06) weiterer Streckenabschnitte (a2, a3) aufweist.

3. Verfahren nach Anspruch 2, **dadurch gekennzeichnet, dass** der Magnetläufer (M) zu einem ersten Zeitpunkt (t1, t3, t5) und bei minimaler vierter Anzahl y = 1 von mit ihm wirkverbundener Statoren (S01,..., S06) nur mit dem ersten Stator (S01, S03, S05) in Wirkverbindung steht und dieser erste Stator (S01, S03, S05) über den zugehörigen elektronischen Schalter (T01, T03, T05) mit der ersten Energieversorgungseinheit (U1) versorgt wird, während die zweite Energieversorgungseinheit (U2) noch lastfrei ist, und zu einem weiteren Zeitpunkt (t2, t4, t6) der Magnetläufer (M) mit dem ersten Stator (S01, S03, S05) mindestens noch teilweise in Wirkverbindung steht und gleichzeitig mit dem zweiten Stator (S02, S04, S06) schon mindestens teilweise in Wirkverbindung steht, wobei dieser erste Stator (S01, S03, S05) noch über den zugehörigen elektronischen Schalter (T01, T03, T05) mit der ersten Energieversorgungseinheit (U1) versorgt wird und der zweiter Stator (S02, S04, S06) schon über den zugehörigen elektronische Schalter (T02, T04, T06) mit der zweiten Energieversorgungseinheit (U2) versorgt wird.

4. Verfahren nach Anspruch 2, **dadurch gekennzeichnet, dass** der Magnetläufer (M) zu einem ersten Zeitpunkt (t1, t3, t5) und bei minimaler vierter Anzahl y = 2 von mit ihm wirkverbundener Statoren (S01,..., S06) nur mit dem ersten und dem zweiten Stator (S01,..., S06) in Wirkverbindung steht, und dieser erste und dieser zweite Stator (S01,..., S06) über die jeweiligen zugehörigen elektronischen Schalter (T01,..., T06) mit der ersten und der zweiten Energieversorgungseinheit (U2) versorgt werden, während die dritte Energieversorgungseinheit (U3) noch lastfrei ist, und zu einem weiteren Zeitpunkt (t2, t4, t6) der Magnetläufer (M) mit dem ersten Stator (S01,..., S06) mindestens noch teilweise in Wirkverbindung steht, mit dem zweiten Stator (S01,..., S06) noch vollständig in Wirkverbindung steht und gleichzeitig mit dem dritten Stator (S01,..., S06) schon mindestens teilweise in Wirkverbindung steht, wobei dieser erste Stator (S01,..., S06) noch über den zugehörigen elektronischen Schalter (T01,..., T06) mit der ersten Energieversorgungseinheit (U1) versorgt wird, der zweite Stator (S01,..., S06) noch über den zugehörigen elektronischen Schalter (T01,..., T06) mit der zweiten Energieversorgungseinheit (U2) versorgt wird und der dritte Stator (S01,..., S06) bereits mit der dritten Energieversorgungseinheit (U3) versorgt wird.
